(19) Europäisches Patentamt
European Patent Office
Office européen des brevets

(11) EP 4 520 736 A1

(12) **EUROPEAN PATENT APPLICATION**

(43) Date of publication:
**12.03.2025 Bulletin 2025/11**

(21) Application number: **23386086.5**

(22) Date of filing: **07.09.2023**

(51) International Patent Classification (IPC):
**C03C 15/00** $^{(2006.01)}$    **B24C 1/00** $^{(2006.01)}$
**C03C 17/06** $^{(2006.01)}$    **C03C 17/09** $^{(2006.01)}$
**C03C 19/00** $^{(2006.01)}$    **C03C 23/00** $^{(2006.01)}$

(52) Cooperative Patent Classification (CPC):
**C03C 17/06; B24C 1/06; C03C 15/00; C03C 17/09;
C03C 19/00; C03C 23/0025;** C03C 2217/732;
C03C 2217/734

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **UCL Business Ltd
London WC1E 6BT (GB)**

(72) Inventor: **The designation of the inventor has not
yet been filed**

(74) Representative: **Barker Brettell LLP
100 Hagley Road
Edgbaston
Birmingham, West Midlands B16 8QQ (GB)**

(54) **RADIATIVE COOLING**

(57)    A radiative cooling unit (100) comprising: a glass sheet (110) having a low-absorption for wavelengths in the solar spectrum, the glass sheet (110) comprising a rear surface (114) and a modified front surface (112), the modified front surface having a random surface roughness; and a reflective layer (130) disposed on the rear surface (114) of the glass sheet (110).

Figure 4

EP 4 520 736 A1

**Description**

**FIELD OF THE INVENTION**

The present invention relates to systems for radiative cooling and methods of producing such systems.

**BACKGROUND**

Radiative cooling is a technology that is widely sought after and promises numerous advantages. By utilising materials to passively radiate thermal energy, rather than relying upon active cooling (i.e., techniques that require a power supply, such as conventional refrigeration or air-conditioning), radiative cooling can provide an efficient and reliable method of cooling buildings, vehicles, devices, etc. Incorporation of radiative cooling units into buildings, for example, may allow for a reduction in buildings' energy consumption while still providing sufficient cooling.

However, current radiative cooling technologies have a number of limitations. Soda lime-based glass (the most commonly manufactured glass) is not typically suitable for radiative cooling purposes. Relatively high absorption of solar energy and sub-optimal emissivity of infrared (IR) wavelengths mean that glass usually heats, rather than providing cooling.

Current glass-based radiative cooling devices typically rely upon specialist manufacturing methods and/or composite materials. These methods often require precise creation of nano-scale structures on substrates by using, for example, methods such as nanoprinting/lithography or transference of the structures using intermediate moulds. Otherwise, films, coatings and paints may be applied to substrates, often requiring non-conventional materials (for example, organic or polymer-based films) and/or layers to be carefully deposited and arranged. Such methods and materials mean that radiative cooling devices are relatively difficult and expensive to produce. Current technologies may also be limited in their application, as delicate nano-scale structures and coatings may not be suitable for use in certain conditions and climates due to their lack of durability.

Although radiative cooling has advanced significantly in recent decades, current limitations mean that the technology has not yet been -widely adopted and further improvements are desirable.

**SUMMARY**

According to a first aspect of the present invention, there is provided a radiative cooling unit comprising a glass sheet having a low-absorption for wavelengths in the solar spectrum, the glass sheet comprising a rear surface and a modified front surface, the modified front surface having a random surface roughness.

The solar spectrum may be regarded as an electromagnetic (EM) spectrum indicative of the EM radiation transmitted from the Sun and/or the extra-terrestrial radiation received on Earth. The solar spectrum may be represented by a model such as the AM1.5 spectrum, for example. When considering such solar radiation, wavelengths in the ultraviolet (UV), visible and near-infrared (NIR) spectra (for example, approximately 300 - 2500 nm) may be of particular importance, given that these wavelengths make up the majority of solar irradiance.

Low-absorption may correspond to an absorbance of less than 0.15, 0.1 or 0.05 for all wavelengths in the visible and NIR range, or the 300 - 2500 nm range, for example (or an average absorbance of less than 0.15, 0.1 or 0.05 over the wavelength range 300 - 2500 nm). Low-absorption may correspond to overall absorption of less than 15%, 10% or 5% of energy received in the solar spectrum/energy received from the Sun.

Use of a modified glass sheet may provide numerous advantages over existing radiative cooling technologies. The modified front surface of the glass sheet may be stronger, more durable and/or more chemically insert than polymer films or coatings. This may reduce the likelihood of damage to the modified front surface, which may allow the radiative heat unit to retain its desirable properties for a longer duration when in use (thereby extending the lifespan of the unit or reducing the need for maintenance/repair). Repair of the radiative cooling unit may also be easier and less costly; the roughness may be readily restored. rather than having to reapply coatings or films.

Glass is also a cheap, widely manufactured material. The use of a modified glass sheet may therefore result in a cheaper radiative cooling unit compared to composite materials. Glass may provide better insulating properties than paints or coatings. A glass-based radiative cooling unit may be easily recyclable and/or manufactured using recycled materials, as glass has a well-developed recycling process. Plastic films and coatings may require more specialised recycling processes.

The radiative cooling unit further comprises a reflective layer disposed on the rear surface of the glass sheet. The reflective layer may be configured to reflect at least 90% of solar energy incident on the radiative cooling unit. The reflective layer be configured to have a reflectance of 0.9 or 0.95 for all wavelengths in the 300 - 2500 nm range, for example. The reflective layer may also be easily recyclable; well-developed recycling processes exist for metals (for example, silver).

The random surface roughness of the modified front surface may be configured to enhance the emissivity of the glass sheet in the range of 8 - 13 $\mu$m. The 8 - 13 $\mu$m range may be regarded as the 'mid-infrared (MIR) window', wherein Earth's atmosphere is substantially transparent.

An enhanced emissivity may be regarded as the glass sheet having a minimum emissivity of at least 0.75, 0.8 or 0.85 for wavelengths in the 8 - 13 $\mu$m range (or an average emissivity of at least 0.75, 0.8 or 0.85 over the wavelength range 8 - 13 $\mu$m). Enhancing the emissivity of a glass sheet may correspond to the emissivity of the glass sheet being increased by any amount. There may be an increase in emissivity of at least 0.01, 0.05 or 0.1 compared to an unmodified glass sheet of the same material. Emissivity may be increased for all or some wavelengths in the 8 - 13 $\mu$m range, or a subset of said range. For example, emissivity may be increased by approximately 0.1 in the range of 9 to 11 $\mu$m, and increased by a lesser amount outside of this range. Where the glass sheet has a particularly low emissivity at certain wavelengths (which may approximately 10 $\mu$m for soda lime), the emissivity may be increased at these wavelengths by a greater amount such that the emissivity is 'flatter' across the MIR window.

Random surface roughness may be regarded as the surface having a roughened, textured surface (compared to typical glass sheets) wherein the texture does not have any distinguishable, repeating structure. The modified front surface may be 'textured' but not comprise any ridges, protrusions, etc. with a repeating pattern. The texture may be regarded as having a granular structure.

The roughness of the modified front surface may be characterised by a height error/deviation (for example, root mean square error) and an autocorrelation length. The roughness of the modified front surface may have a standard deviation of height of less than 20 $\mu$m. The roughness may have a standard deviation of at least 2$\mu$m. Sufficient emissivity may be achieved with roughness having a standard deviation between 1 $\mu$m and 20 $\mu$m, or between 2 $\mu$m and 10 $\mu$m. The roughness may have an autocorrelation length of less than 100 $\mu$m or between 20 $\mu$m and 200 $\mu$m (or between 30 $\mu$m and 100 $\mu$m).

The roughness of the modified front surface may be measured using any suitable means. Profilometers capable of measuring surface roughness with sub-micrometre accuracy are commercially available. Profilometers may be contact/forced based or optical based. Other methods may equally be used to measure/characterise the surface of the modified sheet, such as atomic force microscopy, from which the deviation and autocorrelation length can be determined.

The glass sheet may comprise a low-iron glass material. The glass sheet may be made from a single sheet of the low-iron glass material. The low-iron glass material may have a ferric oxide (i.e., iron oxide) content of less than 0.01% by mass.

The low-iron glass material may be Pilkington Optiwhite™, for example. The low-iron glass material may be of a quality (e.g., having a manufacturing precision/tolerance and a transparency) such that it would be suitable for solar panel or optical display applications.

The glass sheet may have a thickness of less than 2 mm or less than 1 mm. The thickness of the glass sheet may be configured for a desired compromise between optical and mechanical properties, for example. This may be dependent on the application of the radiative cooling unit. For example, a thickness of approximately 1 mm may enable a lightweight unit with minimal absorption of solar energy, while still being durable enough that the radiative cooling unit could be used outside (e.g., mounted to a building).

The glass sheet may have a thickness of $\leq 500$ $\mu$m. The glass sheet may have a thickness of 100 $\mu$m or 200 $\mu$m, for example. Glass sheets with thicknesses significantly less than 1 mm may be regarded as 'ultra-thin'.

The use of an ultra-thin glass sheet may enable the radiative cooling unit to be flexible (i.e., the radiative cooling may be deformable and/or conformed to a curved surface). The use of an ultra-thin glass sheet may allow the glass sheet to be 'low-absorption' even where the glass sheet is not made from a low-iron glass material. I.e., the ultra-thin glass sheet may comprise a material with a ferric oxide content of 0.01% by mass or greater, while still providing sufficiently low absorption of solar energy that the radiative cooling unit is not heated excessively. The glass sheet may comprise Corning® Willow® glass, for example.

The reflective layer may comprise a metallic layer deposited on the rear surface of the glass sheet. The metallic layer may be deposited onto the rear surface of the glass using, for example, physical vapour deposition (PVD) or chemical vapour deposition (CVD). The metallic layer may comprise silver or aluminium or another reflective metal.

The reflective layer may be configured to reflect at least 90% or 95% of energy in the solar spectrum incident on the radiative cooling unit at the front surface. The reflective layer may have a transmittance of less than 0.1 or less than 0.05 for wavelengths in the 300 - 2500 nm range (or an average transmittance of less than 0.1 or 0.05 over the wavelength range 300 - 2500 nm).

The metallic layer may have a thickness of 200 nm or less. The thickness of the metallic layer may be configured such that the radiative cooling unit is substantially opaque to solar wavelengths (e.g., a transmittance or average transmittance of less than 0.1 or less than 0.05 for wavelengths in the solar spectrum, particularly 300 - 2500 nm). The required thickness to achieve a desired opacity may be dependent on the metal used. The metallic layer may have a thickness of 100 nm, 150 nm or 200 nm. The metallic layer may be thicker than 200 nm where the thickness is not a crucial design factor. Where the reflective layer is preferably substantially opaque (i.e., transmittance or average transmittance of 0.01 or ~ 0 for solar wavelengths), the metallic layer may be 300 nm, 500 nm. 1 $\mu$m or greater in thickness.

The metallic layer may have a thickness of 10 nm or less. The thickness of the metallic layer may be configured such that the radiative cooling unit is at least partially transmissive to solar wavelengths, particularly in the visible range (e.g., a transmittance of approximately 0.1 or 0.2). This may allow the radiative cooling unit to be used in applications where some transparency is desirable, for example in architectural or automotive windows.

The reflective layer may comprise a diffuse solar reflector. The diffuse solar reflector may be configured to diffusely reflect at least 90% or 95% of the solar spectrum energy incident on the radiative cooling unit.

The diffuse solar reflector may comprise a polymer material with a high diffuse reflectance (at least 95% or at least 99%) in the visible and NIR range. The diffuse solar reflector may comprise Spectralon or other similar fluoropolymers, for example. The diffuse reflector material may comprise other types of high-reflectance/low-absorption polymer materials, for example polyethylene or polysiloxanes. The diffuse reflector material may have a porous structure, such that a substantial proportion of incoming light is back scattered. The diffuse reflector material may be deposited directly onto the rear surface of the glass sheet (using any suitable deposition technique). Alternatively, the diffuse solar reflector may be a separate component (for example, a diffuse reflector material deposited onto a substrate). The solar reflector may be affixed to the rear surface of the glass sheet using any suitable mechanical means or an adhesive.

The reflective layer may comprise a plurality of layers comprising at least two materials, the two materials having different refractive indices, wherein the plurality of layers comprises alternating layers of the two materials (the reflective layer may be configured as a Bragg mirror). At least one layer of each material may be provided. The plurality of layers may comprise at least one layer of high refractive index material and at least one layer of low refractive index material (for wavelengths in the solar spectrum). The plurality of layers may comprise $Si_3N_4$ and $BaF_2$, for example. Similar to the use of an ultra-thin metallic layer (10 nm or less), the layered reflective layer may enable the radiative cooling unit to be at least partially transmissive to wavelengths in the solar spectrum or at least the visible range.

The radiative cooling unit may further comprise a protective layer disposed on a back side of the reflective layer. The protective layer may comprise an additional glass layer or a polymer layer disposed on the rear side of the reflective layer. The protective layer may be laminated on to the rear side of the reflective layer. The protective layer may reduce the likelihood of damage to the reflective layer.

The radiative cooling unit may further comprise a colour layer configured to impart a visible colour to light reflected from the radiative cooling unit. This may give the glass of the cooling unit a coloured appearance (whereas the radiative cooling unit may otherwise have a diffuse white appearance). The colour layer may be disposed on a front surface of the reflective layer and/or on the rear surface of the glass sheet. The colour sheet may be sandwiched between the reflective layer and the rear surface of the glass sheet when the radiative cooling unit is assembled. This may reduce the likelihood of the colour laying being damaged and/or prevent interference with the modified front surface of the glass sheet. Alternatively, the colour layer may be disposed on the front surface of the glass sheet. The colour layer may be disposed on top of the modified front surface of the glass sheet. Modification of the front surface of the glass sheet may comprise modification of the colour layer - i.e., the colour layer at the front surface of the glass sheet may be roughened, rather than the glass sheet itself.

The colour layer may comprise any transparent/translucent material that will result in reflected light being coloured. The colour layer may comprise a transparent polymer layer (for example, PMMA, PDMS, polycarbonate or polyethylene). The polymer layer may be between 1 and 200 microns, or 2 and 100 microns. The colour layer may comprise a fluorescent material. The fluorescent material may be mixed into or disposed on the polymer layer. The fluorescent material may comprise a fluorescent dye or quantum dots, for example. The fluorescent material may be configured to absorb part of the solar radiation (e.g., UV light) and emit this at a different wavelength. The fluorescent material may fluoresce at a visible wavelength (e.g., green, red or blue), thereby resulting in the overall light reflected from the cooling unit having a corresponding colour - i.e., colour is 'added' to the reflected visible spectrum. The colour layer may comprise non-fluorescent paints/pigments. The use of fluorescent materials to generate a coloured appearance may be preferable to using non-fluorescent materials or coloured glass. Said materials generate colour by absorbing certain visible wavelengths -i.e., 'taking' certain colours from the reflected visible spectrum. Using non-fluorescent materials may reduce the thermal performance of the radiative cooling unit.

According to a second aspect of the present invention, there is provided a method of producing a radiative cooling unit, the method comprising:

> providing a glass sheet having a low-absorption for wavelengths in the solar spectrum, the glass sheet comprising a rear surface and a front surface;
> modifying the front surface of the glass sheet to produce a modified front surface having a random surface roughness; and
> applying a reflective layer to the rear surface of the glass sheet.

The method may be used to produce a radiative cooling unit according to the first aspect.

Modifying the front surface of the glass sheet may comprise mechanical abrasion. The front surface of the glass sheet may be sandblasted, for example. 'Sandblasting' may comprise spraying the front surface with any suitable abrasive (such as grit, metallic particles, ceramic particles, etc.) and not necessarily sand. Alternatively, mechanical abrasion may comprise sanding the front surface. Similar to above, 'sanding' may comprise using any suitable abrasive material (for example, wire wool) and not necessarily sandpaper. Sanding may be done with a sheet of abrasive material or with a belt or disk sander, for example. Any suitable process by which the front surface is roughened may be used. The front surface may be sandblasted (or otherwise abraded) to achieve a desired emissivity of the glass sheet in the 8 - 13 $\mu$m range. The desired emissivity may be achieved by controlling the pressure of a blasting fluid, the abrasiveness of an abrasive material and/or the blasting duration, for example.

Sandblasting may be performed with a polydisperse abrasive (e.g., polydisperse alumina) having a relatively large range of grit sizes, for example 60 to 80 grit (approximately 250 to 160 microns). Commercially available polydisperse alumina may be available with grit sizes in the range of 40 (approximately 400 microns) to microfine grit size 1200 (approximately 4.5 microns). An abrasive with a grit size of between 240 and 800 may be used (corresponding to particle sizes between 53.5 and 9.8 microns). The abrasive may have a grit size of 500 (approximately 16 to 20 microns particle size). The particle size may be an average particle size. The average particle size may be determined/verified via test sieves.

The sandblasting may be performed in a pattern across the glass sheet, so as to cover the whole sheet and to generate a uniform, random roughness. The sandblasting may be performed in figure-of-eight pattern, for example, which may reduce the formation of long-range repeating structures (for example, lines or swirls associated with a linear or circular blasting pattern). The glass sheet may be held by a user and then moved under the sandblasting nozzle manually (or vice versa), or the nozzle may be scanned electronically/mechanically over the glass sheet. The nozzle of the sandblasting apparatus may be positioned approximately 10 to 20 cm or 5 to 30 cm away from the glass sheet.

The size of the grit, the distance from the nozzle and the time duration of sandblasting may all be parameters that are varied/selected in order to achieve a desired roughness.

Modifying the front surface of the glass sheet may comprise chemical etching. An acid, for example hydrofluoric acid, may be applied to the front surface of the glass sheet. Parameters of the chemical etching (e.g., acid strength/-concentration, duration, etc.) may be controlled to achieve a desired emissivity of the glass sheet.

Modifying the front surface of the glass sheet may comprise laser ablation. A laser may be scanned across the surface of the glass sheet in order to generate the desired surface roughness. The power and/or pulse duration may be controlled in order to produce a desirable ablation. The laser may have a pulse length of less than 1 microsecond, or less than 500 nanoseconds, or less than 100 nanoseconds, for example. Short laser pulses may be used to produce the desired micron-sized features of the modified surface.

Mechanical abrasion, chemical etching or laser ablation may provide for an easier and/or cheaper method of manufacturing radiant cooling units, compared to methods of the prior art. Sandblasting and acid etching are both established techniques that are used extensively in the glass-making industry. Using these techniques to produce the modified front surface may be preferable to lithographic or nanoprinting-based techniques, or use of other materials (for example, applying separate films to the glass).

According to a third aspect of the present invention, there is provided a radiative cooling unit comprising a glass sheet having a low-absorption for wavelengths in the solar spectrum, the glass sheet comprising a rear surface and a front surface. The radiative cooling unit further comprises a reflective layer disposed on the rear surface of the glass sheet. Where applicable, the radiative cooling unit may have similar features to the first aspect (e.g., similar glass sheet and/or reflective layer properties).

The radiative cooling unit further comprises a film disposed on the front surface of the glass sheet; the film configured to enhance the emissivity of the glass sheet in the range of 8 to 13 $\mu$m. An enhanced emissivity may be regarded as the film/glass sheet having a minimum emissivity of at least 0.75, 0.8 or 0.85 for wavelengths in the 8 - 13 $\mu$m range (or an average emissivity of at least than 0.75, 0.8 or 0.85 over the wavelength range 8 - 13 $\mu$m). Enhancing the emissivity of a glass sheet may correspond to the emissivity of the glass sheet being increased by any amount. There may be an increase in emissivity of at least 0.01, 0.05 or 0.1 compared to glass sheet without a film or coating. Emissivity may be increased for all or some wavelengths in the 8 - 13 $\mu$m range, or a subset of said range. For example, emissivity may be increased by approximately 0.1 in the range of 9 to 11 $\mu$m, and increased by a lesser amount outside of this range. Where the glass sheet has a particularly low emissivity at certain wavelengths (which may approximately 10 $\mu$m for soda lime), the emissivity may be increased at these wavelengths by a greater amount such that the emissivity is 'flatter' across the MIR window.

The film may comprise a thin film (approximately 1 $\mu$m in thickness) of low-index, low-absorption (at solar spectrum wavelengths) material. The film may comprise at least one of $MgF_2$, $CaF_2$ or $BaF_2$, for example.

Use of a film on the front surface of the glass sheet (rather than modifying the front surface to have a random surface roughness) may be beneficial for certain applications. The use of a film may provide the same benefits discussed for the radiative cooling unit of the first aspect, without producing a hazy or 'frosted' appearance. This may be beneficial where the radiative cooling unit is at least partial transmissive (the modified textured front surface may reduce transmission of visible light through the glass sheet) or where a polished, mirrored appearance is desired.

According to a fourth aspect of the present invention, there is provided a radiative cooling system comprising one or more radiative cooling units according to the first or third aspect.

The radiative cooling system may further comprise a heat exchanger and a cooling loop fluidly coupled to the one or more radiative cooling units and the heat exchanger, the cooling loop configured to transport a cooling fluid from the heat exchanger to the one or more radiative cooling units. The radiative cooling system may enable heat to be transferred from a remote location that is not necessarily adjacent to the radiative cooling units (via the heat exchanger and cooling loop) where energy can be emitted, thereby cooling the remote location.

## DETAILED DESCRIPTION

Embodiments of the invention will be described, purely by way of example, with reference to the accompanying drawings, in which:

Figure 1 is a graph depicting the wavelengths associated with solar radiation, ambient blackbody radiation and atmospheric emissivity;

Figure 2 is a simplified diagram of heat transfer processes during radiative cooling;

Figure 3 comprises graphs depicting absorption and emissivity properties of soda lime glass;

Figure 4 is a schematic diagram of an example radiative cooling unit;

Figure 5 comprises graphs depicting transmission and reflectance properties of an example glass sheet;

Figure 6 is a graph depicting the effect of sandblasting on the emissivity of a glass sheet/radiative cooling unit;

Figure 7 is a profilometry plot of a sandblasted glass surface;

Figure 8 is a graph depicting the surface profile of a sandblasted glass surface;

Figure 9 is a graph depicting the variation of glass sheet/radiative cooling unit emissivity as a function of the thickness of a thin-film;

Figure 10 is a graph depicting transmission and reflectance properties of a glass sheet/radiative cooling unit;

Figure 11 is a graph depicting the net cooling power of a radiative cooling unit; and

Figure 12 is a schematic diagram of an example radiative cooling system.

Like features of the various figures shall be donated with the same reference numerals.

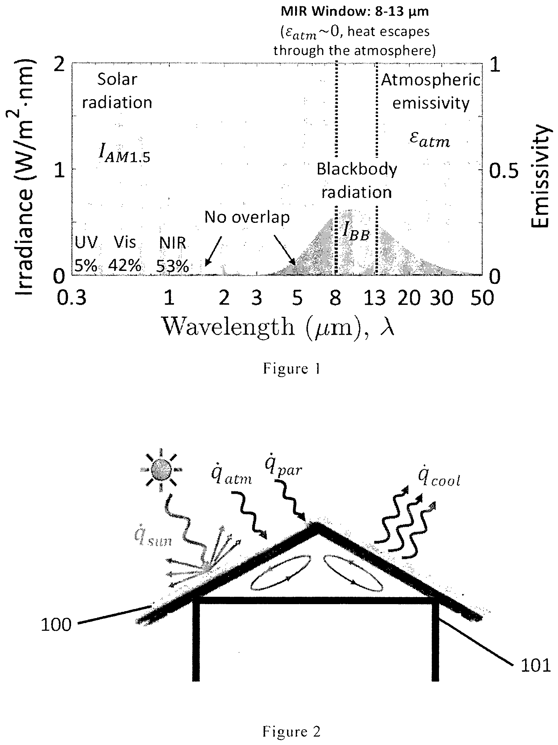

Referring to Figure 1, the graph shows the solar radiation spectrum (irradiance, $I_{AM1.5}$, as a function of wavelength, $\lambda$), the emissivity spectrum of the Earth's atmosphere (emissivity, $\varepsilon_{atm}$, as a function of wavelength, $\lambda$), and the spectrum emitted by an ideal blackbody at 300 K (irradiance, $I_{BB}$, as a function of wavelength, $\lambda$).

In this graph, the solar spectrum is modelled using the Air Model (AM) 1.5 to represent solar radiation received on Earth. The AM 1.5 model is widely used for characterising solar panel performance.

As shown in Figure 1, there is little or no overlap between the solar spectrum (wherein the vast majority of energy is transmitted at ultraviolet (UV), visible and near-infrared (NIR) wavelengths; approximately 300 - 2500 nm) and the emission spectrum of a blackbody at 300 K (wherein the vast majority of energy is emitted at wavelengths greater than 3 $\mu$m). A significant amount of the energy emitted by the blackbody is in the 8 - 13 $\mu$m range. This region is known as the 'mid-infrared (MIR) window', as the Earth's atmosphere is substantially transparent to MIR wavelengths.

Radiative cooling may be enabled by providing a material that is substantially transparent to solar wavelengths of 300 - 2500 nm and has a high emissivity for MIR wavelengths of 8 - 13 $\mu$m. Such a material would reduce the amount of solar energy absorbed by a radiative cooling unit while maximising the amount of energy emitted into space in the MIR window via blackbody radiation.

Referring to Figure 2, an illustration of a simplified radiative cooling process is shown. The diagram shows the main heat transfer mechanisms associated with radiative cooling. In this example, a radiative cooling unit 100 is mounted to a roof of a building 101.

Energy can be transferred to the radiative cooling unit 100 from a number of external sources. Incoming energy is transferred to the radiative cooling unit via electromagnetic (EM) radiation transmitted directly from the Sun or reflected off of the atmosphere, with heat transfer rates of $\dot{q}_{sun}$ and $\dot{q}_{atm}$ respectively. Some energy may also be transferred to the heat transfer unit 100 via parasitic sources (such as convection and conduction from the surrounding atmosphere), with a heat transfer rate of $\dot{q}_{par}$.

Outgoing energy is transmitted from the radiative cooling unit 100 via blackbody radiation, with a heat transfer rate of $\dot{q}_{cool}$. The radiative cooling unit 100 will have a natural blackbody radiation temperature (ambient temperature of approximately 300 K). The radiative cooling unit 100 will reach an equilibrium temperature, which will depend on the temperature of the environment surrounding the unit 100, the solar radiation energy absorbed and heat exchanges with other surrounding objects (such as the house 101 structure to which the unit 100 is coupled). As the radiative cooling unit 100 radiates energy, energy will be transferred to the radiative cooling unit 100 from the surrounding ambient environment, thereby providing passive cooling of the house 101.

For the radiative cooling unit 100 to cool the house 101, the outgoing energy transfer much be greater than the incoming energy transfer. I.e.,

$$\dot{q}_{cool} > \dot{q}_{sun} + \dot{q}_{atm} + \dot{q}_{par} \qquad (1)$$

This can be achieved by maximising emission of energy from the radiative cooling unit 100 (i.e., increasing the emissivity of the unit, particularly in the MIR wavelength range where energy can be efficiently radiated into outer space) and/or reducing the absorption of solar energy. The radiative cooling unit 100 may reflect a substantial amount of solar spectrum energy in order to reduce the amount of energy absorbed by the radiative cooling unit 100 and the house 101.

If the condition in equation 1 is satisfied, radiative cooling can provide a means of passive cooling. No energy is required to provide the cooling effect; instead, the cooling results from the selective reflectance/emittance of the solar and blackbody wavelengths shown in Figure 1. An ideal radiative cooling unit would have an emissivity of ~ 1 for wavelengths in the MIR window and a reflectivity of ~ 1 for all other wavelengths (particularly wavelengths in the solar spectrum).

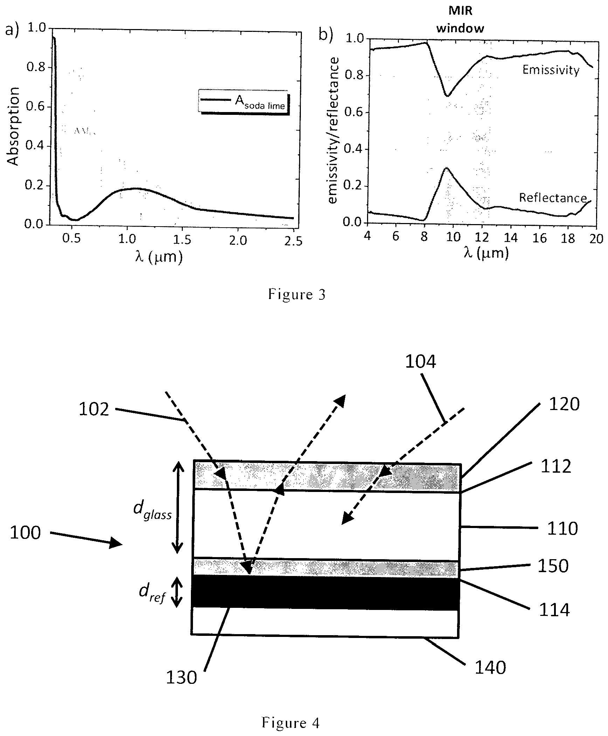

With reference to Figure 3, optical properties of a soda lime-based glass sheet are shown. Soda lime glass is widely used in conventional applications.

Graph a) shows that although soda lime-based glass is 'transparent', a significant amount of energy in the solar spectrum is absorbed. Soda lime absorption ($A_{soda\ lime}$) of visible/NIR wavelengths may be as high as ~ 0.2, for example. Absorption of solar radiation, proportional to $\dot{q}_{sun}$ in equation 1, will therefore be increased, reducing the cooling effect provided by the unit. Graph b) shows that soda lime also has a sub-optimal emissivity for MIR wavelengths, which may be as low as ~ 0.7 in the MIR window.

These two properties of soda lime glass may make conventional glass sheets unsuitable for radiative cooling purposes; the requirement in equation 1 may not be met. Polished glass surfaces may instead act as a heat mirror, actively heating an underlying structure by 'trapping' heat via a greenhouse effect.

Referring to Figure 4, a schematic diagram of a radiative cooling unit 100 is shown. The radiative cooling unit 100 comprises a glass sheet 110, the glass sheet having a front surface 112 and a rear surface 114.

The radiative cooling unit 100 comprises a modified front surface 120. The modified front surface 120 has a random surface roughness. The modified front surface 120 may be manufactured by, for example, sandblasting, acid etching or laser ablating the front surface 112 of the glass sheet 110.

Alternatively, the modified front surface 120 may instead be a separate component, such as a thin-film or a coating that is applied to/deposited on the front surface 112 of the glass sheet.

The radiative cooling unit 100 further comprises a reflective layer 130 disposed on the rear surface 114 of the glass sheet 110. The reflective layer 130 may comprise a metal mirror that is deposited onto the rear surface 114 or a diffuse reflector material. A protective layer 140 (for example a glass or polymer layer) may be disposed on a rear surface of the reflective layer 130, though this is not essential to the radiative cooling effects of the unit 100. A colour layer 150 (e.g., a polymer layer comprising a fluorescent material or quantum dots) may be sandwiched between the glass sheet 110 and the reflective layer 130, though this is not essential to the radiative cooling effects of the unit 100. The colour layer 150 is configured to provide the radiative cooling unit 100 with a coloured appearance (e.g., red, green or blue). The colour layer may comprise a transparent polymer layer (for example, PMMA, PDMS, polycarbonate or polyethylene). The colour layer may comprise a fluorescent material mixed into or disposed on the polymer layer (e.g. a fluorescent dye or quantum dots, for example). The fluorescent material absorbs part of the solar radiation (e.g., UV light) and emits at a different wavelength. The fluorescent material may fluoresce at a visible wavelength (e.g., green, red or blue), thereby resulting in the overall light reflected from the cooling unit having a corresponding colour - i.e., colour is 'added' to the reflected visible spectrum.

The glass sheet 110 has a low absorbance for solar spectrum wavelengths. The glass sheet 110 may be made from low-iron glass. Alternatively, or additionally, the thickness of the glass sheet 110, $d_{glass}$, may be thin enough that absorption of solar radiation is minimal. A significant proportion (for example, 90% or more) of incoming solar radiation 102 may be transmitted through the glass sheet 110, being reflected from the reflective surface 130.

In certain applications of the radiative cooling unit 100, the reflective layer 130 may be omitted, may be made ultra-thin (for example, a thickness $d_{ref}$ of approximately 10 nm or less), or may be replaced by a semi-reflective film. In such examples, a portion of the incoming solar radiation 102 may be transmitted through the radiative cooling unit 100 to the rear side (i.e., pass through the glass sheet 110 rather than being reflected), making the radiative cooling unit 100 partially-transparent.

The modified front layer 120 (or equally, the thin-film/coating applied to the front surface 112) enhances the emissivity of the glass sheet for MIR wavelengths (particularly 8 - 13 $\mu$m). A substantial portion of incoming MIR radiation 104 may be absorbed by the glass sheet and subsequently emitted. The glass sheet 110 will similarly emit a substantial proportion of blackbody radiation (of which a significant portion will be in the MIR window range of 8 - 13 $\mu$m for ambient objects of ~ 300 K). This enables the radiative cooling unit 100 to emit thermal energy that has been absorbed from the surrounding environment and/or underlying structures, thereby cooling said environment/structures.

The radiative cooling unit 100 is shown in Figure 4 as a standalone component. However, this unit, including the variations discussed above, may be incorporated into a wide range of applications. The radiative cooling unit 100 of Figure 4 could be applied to buildings to provide cooling, either on the walls or on the roof (similar to a solar panel array). Where the radiative cooling unit 100 is at least partially transparent, this may allow it to be used as a window in buildings or vehicles, for example. Where the glass sheet 110 is ultra-thin, the radiative cooling unit 100 may be flexible, thereby allowing it to be used in further applications wherein the sheet may be bent or deformed (the radiative cooling unit could be incorporated applied to a curved surface, for example).

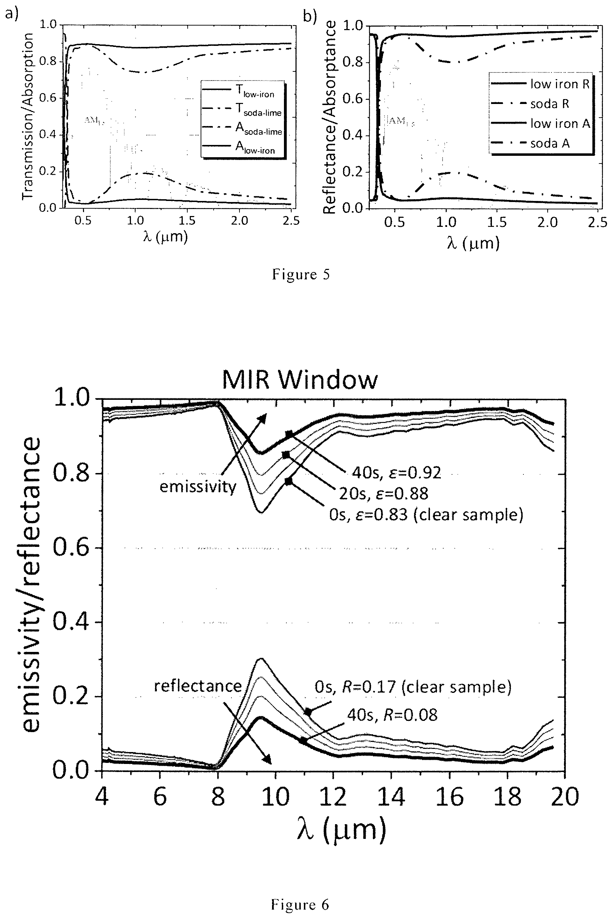

Referring to Figure 5, optical properties of soda lime glass and low-iron glass are compared. The thickness of the glass sheets used for these measurements was 2 mm. A UV-Visible-NIR spectroscopy was used for solar spectrum measurements, while Fourier transform infrared (FTIR) spectroscopy was used for MIR spectrum measurements. In both cases an integrating sphere was used to capture both specular and diffuse radiation. This setup was also used for the measurements of later Figures.

Graph a) shows the transmission T/ absorption A of a comparable glass sheet made from soda lime and low-iron glass. Transmission is measured as the amount of incident light that passes through the glass sheet. No reflective layer or modified front surface is provided in this instance. As shown in graph a), low-iron glass has a greater transmission than soda lime glass across the range of solar spectrum wavelengths, particularly for visible and NIR wavelengths.

Graph b) shows the reflectance R/absorptance A of comparable soda lime and low-iron glass sheets. Reflectance is measured as the amount of incident light that is reflected from the glass sheet. In this case, a layer of silver was deposited onto the rear surface of the glass sheet. This reflective layer changes the glass sheet from being highly transmissive (as shown in graph a) to highly reflective. As shown in graph b), low-iron glass has a greater reflectance than soda lime glass across the range of solar spectrum wavelengths, particularly for visible and NIR wavelengths.

The greater transmission/reflectance enabled by low-iron glass results in less solar radiation being absorbed by the glass sheet, which may mean that low-iron glass is preferable for use in radiative cooling units.

Referring to Figure 6, the effect of modifying the front surface of the glass sheet is illustrated. The graph shows the change in the emissivity/reflectance of a low-iron glass sheet for wavelengths in the MIR window as the front surface is sandblasted for different durations (thereby increasing the roughness of the front surface).

The sandblasting in this instance used general purpose, polydisperse alumina. The sandblasting was performed using a Guyson manual blasting cabinet, with the glass being moved relative to the blasting nozzle in a figure-of-eight pattern at a distance of approximately 10 to 20 cm. Sandblasting may alternatively be performed using an automated or semi-automated process (i.e., a process at least partially controlled via computer). The sandblasting may be performed using any commercially available blasting cabinet; this may be dependent on the blasting parameters required and the dimensions of the glass sheet.

As shown, the emissivity, $\varepsilon$, of a clear sample (i.e., a glass sheet not subjected to sandblasting) at approximately 10.5 $\mu$m is 0.83. When the sample is sandblasted for 20 seconds, the emissivity is enhanced to 0.88. When the sample is sandblasted for 40 seconds, the emissivity is further enhanced to 0.92. The emissivity of the sample is increased via sandblasting for all wavelengths across the MIR range, which may enable more effective radiative cooling.

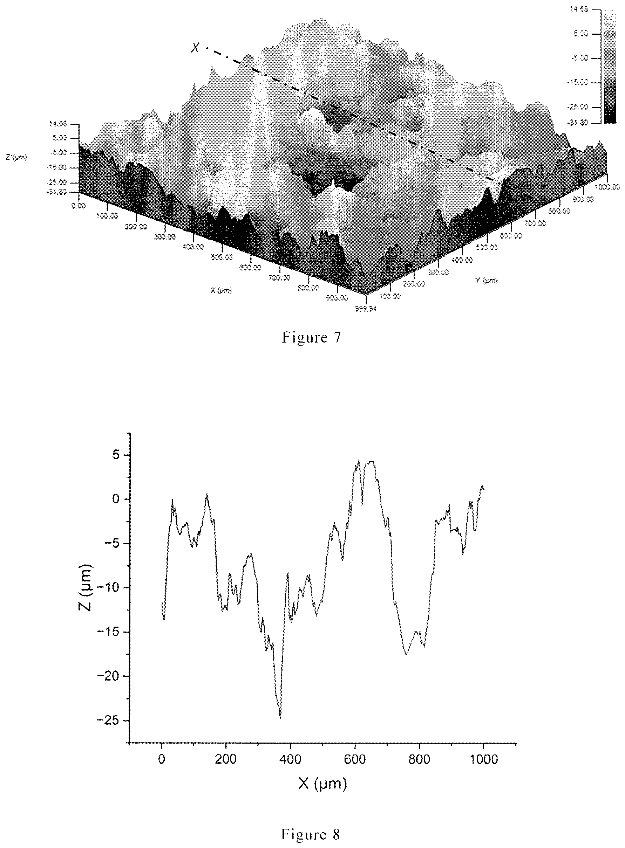

Referring to Figures 7 and 8, the surface profile of a sandblasted glass surface is shown. The surface profile characterisation was performed using an optical microscope and a profilometer. The surface profile was taken across a length of ~ 1 mm, using a speed of 200 $\mu$m/s and a sampling frequency of 200 Hz. From the surface profile measurements shown in Figure 7, a line profile was taken along the X axis, as shown in Figure 8. The root mean square (RMS) deviation was found to be 6.26 $\mu$m. The autocorrelation length, $\xi$, was found to be 62 $\mu$m.

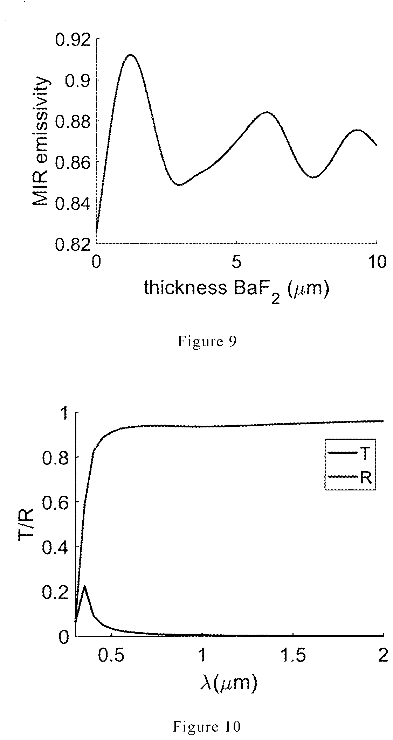

Referring to Figure 9, the emissivity of a glass sheet may be enhanced by disposing a low-index, low-absorption coating to the front surface of the glass sheet. The graph shows that a thin-film of $BaF_2$ applied to the front surface of the glass sheet can increase emissivity in the MIR range. Emissivity is dependent on the thickness of the coating, but an approximately 1 $\mu$m thick $BaF_2$ film can enhance the emissivity of the glass sheet to approximately 0.91. A thickness of ~ 1

$\mu$m may be preferable for $BaF_2$, but other thicknesses may be used/may be optimal for other materials. Such a coating may provide for similar emissivity enhancement as a roughened surface (as shown in Figure 6), but without creating a hazy appearance. The measurements of Figure 9 were taken at 10 $\mu$m (in the middle of the MIR window).

Referring to Figure 10, the transmissivity T/reflectance R are shown for a radiative cooling unit wherein the reflective layer disposed on the rear surface of the glass sheet comprises an ultra-thin ($\leq$ 10 nm) silver layer. The graph shows that when an ultra-thin reflective layer is used, transmittance of light in the solar spectrum range (particularly for visible wavelengths) through the radiative cooling unit may be significant. Transmissivity of certain visible wavelengths may be approximately 0.2. Similar transmissivity may be achieved by replacing the metallic reflective layer with alternating layers of high and low refractive index layers (for example, $Si_3N_4$ and $BaF_2$). The thin-film front surface discussed with reference to Figure 9 may be used in addition to the ultra-thin/stacked reflective layer(s) discussed above to provide a non-hazy, partially transparent radiative cooling unit.

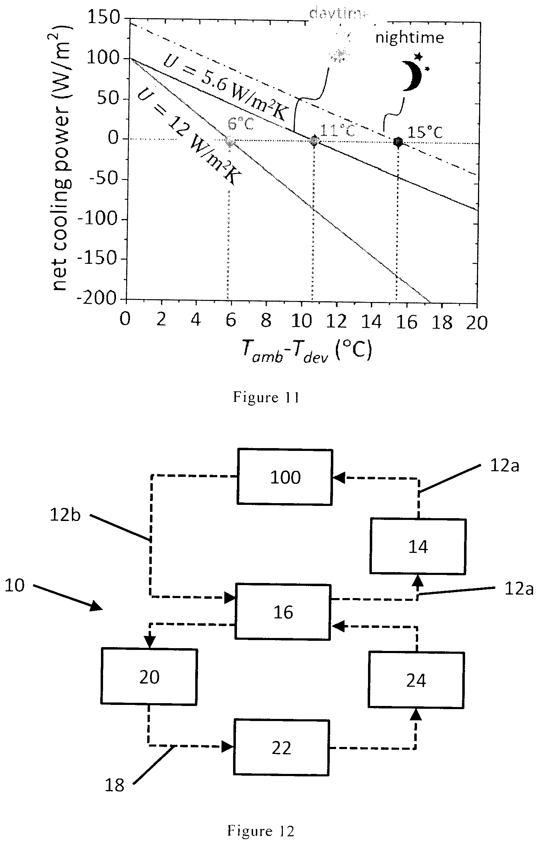

Referring to Figure 11, the radiative cooling effects of a radiative cooling unit according to the present invention are shown. The radiative cooling unit is capable of providing a net cooling power (measured in W/m$^2$) until a maximum temperature difference is created between ambient temperature, $T_{amb}$, and the temperature of the thermal cooling unit $T_{dev}$. Once this maximum temperature difference is reached, the net cooling power is 0 W/m$^2$, and $T_{dev}$ cannot be further reduced via radiative cooling.

The radiative cooling unit of the present invention may be able to achieve a cooling of 11°C below ambient in the daytime and 15°C below ambient at night-time. In the graph of Figure 11, $U$ refers to the thermal transmittance value of the glass sheet. Use of a low U value glass may be desirable as this may provide more effective cooling.

Referring to Figure 12, a schematic diagram of a radiative cooling system 10 is shown. The radiative cooling system comprises one or more radiative cooling units 100 and a heat exchanger 16. A cooling loop 12 is fluidly coupled to the radiative cooling units 100 and the heat exchange 16 and configured to carry a cooling fluid (for example, water) between the radiative cooling unit 100 and the heat exchanger 16. The cooling fluid may be pumped around the cooling loop 12 by a pump 14. The one or more radiative cooling units 100 may each be a radiative cooling unit as discussed above (e.g., as shown in Figure 4).

The heat exchanger 16 transfers heat to the cooling fluid. The cooling loop comprises a hot side 12a, configured to transfer the heated cooling fluid to the radiative cooling unit 100, whereat heat is then emitted via radiative cooling. The cooling loop comprises a cold side 12b configured to transfer the cooled cooling fluid back to the heat exchanger 16. This process allows for thermal energy to be transferred from the heat exchanger 16 the radiative heat unit 100, thereby removing thermal energy from heat exchanger 16 via passive cooling.

A refrigeration loop 18 (or any other device) may be provided as an input to the heat exchanger 16. The refrigeration loop may carry a refrigerant fluid and may be coupled to an evaporator 20, a compressor 22 and a condenser 24, for example. The refrigerant loop 18 may be configured to remove thermal energy from an enclosed volume (for example, a room or a vehicle compartment).

Where the radiative cooling unit 100 is used by itself (for example, as a window), thermal energy may be removed from the area surrounding the radiative cooling unit 100 (e.g., thermal energy is transferred from the walls and air surrounding the radiative cooling unit 100). However, the system 10 may allow for the enclosed volume to be remote from the radiative cooling unit 100 and still be cooled via radiative cooling. For example, the enclosed volume could be a room within a building while the radiative cooling unit 100 could be situated atop a roof. The cooling loop 12a,b and refrigerant loop 18 may enable the room and the radiative cooling unit 100 to be thermally coupled, thereby enabling thermal energy to be removed from the remote volume and emitted at the radiative cooling unit 100.

A portion of the cooling loop 12a,b may be located in close proximity to the radiative cooling unit 100 to enable efficient heat transfer. For example, the cooling loop 12a may comprise a series of coils in contact with a rear surface of the radiative cooling unit 100.

Although specific examples have been described, the skilled person will appreciate that variations are possible, within the scope of the invention, which should be determined with reference to the accompanying claims.

**Claims**

1. A radiative cooling unit comprising:

   a glass sheet having a low-absorption for wavelengths in the solar spectrum, the glass sheet comprising a rear surface and a modified front surface, the modified front surface having a random surface roughness; and
   a reflective layer disposed on the rear surface of the glass sheet.

2. The radiative cooling unit of claim 1, wherein the random surface roughness of the modified front surface is configured to enhance the emissivity of the glass sheet in the range of 8 - 13 $\mu$m.

3. The radiative cooling unit of claim 1 or 2, wherein the glass sheet comprises a low-iron glass material.

4. The radiative cooling unit of any preceding claim, wherein the glass sheet has a thickness of $\leq 500$ $\mu$m.

5. A radiative cooling unit, comprising:

   a glass sheet having a low-absorption for wavelengths in the solar spectrum, the glass sheet comprising a rear surface and a front surface;
   a film disposed on the front surface of the glass sheet, the film configured to enhance the emissivity of the glass sheet in the range of 8 to 13 $\mu$m; and
   a reflective layer disposed on the rear surface of the glass sheet.

6. The radiative cooling unit of any preceding claim, wherein the reflective layer comprises a metallic layer deposited on the rear surface of the glass sheet.

7. The radiative cooling unit of any preceding claim, wherein the reflective layer is configured to reflect at least 90% of energy in the solar spectrum.

8. The radiative cooling unit of claim 6 or claim 7, wherein the metallic layer has a thickness of $\leq 10$ nm.

9. The radiative cooling unit of any of claims 1 to 5 wherein the reflective layer comprises a diffuse solar reflector.

10. The radiative cooling unit of any of claims 1 to 5, wherein the reflective layer comprises a plurality of layers comprising at least two materials, the two materials having different refractive indices, wherein the plurality of layers comprises alternating layers of the two materials.

11. The radiative cooling unit of any preceding claim, further comprising a protective layer disposed on a back side of the reflective layer.

12. The radiative cooling unit of any preceding claim, further comprising a colour layer configured to impart a visible colour to light reflected from the radiative cooling unit.

13. A method of producing a radiative cooling unit, the method comprising:

   providing a glass sheet having a low-absorption for wavelengths in the solar spectrum, the glass sheet comprising a rear surface and a front surface;
   modifying the front surface of the glass sheet to produce a modified front surface having a random surface roughness; and
   applying a reflective layer to the rear surface of the glass sheet.

14. The method of claim 13, wherein:

   i) modifying the front surface of the glass sheet comprises mechanical abrasion;
   ii) modifying the front surface of the glass sheet comprises chemical etching; and/or
   iii) modifying the front surface of the glass sheet comprises laser ablation.

15. A radiative cooling system comprising:

   one or more radiative cooling units according to any of claims 1 to 12;
   a heat exchanger; and
   a cooling loop fluidly coupled to the one or more radiative cooling units and the heat exchanger, the cooling loop configured to transport a cooling fluid from the heat exchanger to the one or more radiative cooling units.

Figure 1

Figure 2

Figure 3

Figure 4

Figure 5

Figure 6

Figure 7

Figure 8

Figure 9

Figure 10

Figure 11

Figure 12

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 381 837 A (UNIV ZHEJIANG) 4 July 2023 (2023-07-04) * the whole document * | 1-4,6-15 | INV. C03C15/00 B24C1/00 C03C17/06 |
| A | US 2018/180331 A1 (YU NANFANG [US] ET AL) 28 June 2018 (2018-06-28) * paragraphs [0008] – [0010], [0023] – [0026], [0098], [0106], [0138] – [0139]; figures 3,7,10,15 * | 1-4,6-15 | C03C17/09 C03C19/00 C03C23/00 |
| A | EP 3 744 517 A1 (NINGBO RADI COOL ADVANCED ENERGY TECH CO LTD [CN] ET AL.) 2 December 2020 (2020-12-02) * paragraphs [0009] – [0007], [0023] – [0036], [0044], [0086] – [0089]; figures 1-4 * | 1-4,6-15 | |
| T | ZHAO DONGLIANG ET AL: "Radiative sky cooling: Fundamental principles, materials, and applications", APPLIED PHYSICS REVIEWS, AMERICAN INSTITUTE OF PHYSICS, 2 HUNTINGTON QUADRANGLE, MELVILLE, NY 11747, vol. 6, no. 2, 16 April 2019 (2019-04-16), XP012237091, DOI: 10.1063/1.5087281 | | |

| TECHNICAL FIELDS SEARCHED (IPC) |
|---|
| C03C |
| B24C |

The present search report has been drawn up for all claims

| Place of search | Date of completion of the search | Examiner |
|---|---|---|
| Munich | 23 January 2024 | Lecerf, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.........................................................................
& : member of the same patent family, corresponding
document

EPO FORM 1503 03.82 (P04C01)

**Application Number**

EP 23 38 6086

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-4(completely); 6-15(partially)**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

```
1. claims: 1-4(completely); 6-15(partially)

      The first invention provides a radiative cooling comprising
      a rear surface and a front surface. The front surface has a
      random surface roughness and the rear surface is coated with
      a reflective layer.
                           ---


2. claims: 5(completely); 6-15(partially)

      The second invention provides a radiative cooling comprising
      a rear surface and a front surface. The front surface is
      coated with a film and the rear surface is coated with a
      reflective layer.
                           ---
```

**EP 4 520 736 A1**

## ANNEX TO THE EUROPEAN SEARCH REPORT
## ON EUROPEAN PATENT APPLICATION NO.

EP 23 38 6086

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2024

| Patent document cited in search report | | | Publication date | Patent family member(s) | | | Publication date |
|---|---|---|---|---|---|---|---|
| CN 116381837 | A | | 04-07-2023 | NONE | | | |
| US 2018180331 | A1 | | 28-06-2018 | CN | 107923718 | A | 17-04-2018 |
| | | | | EP | 3311094 | A1 | 25-04-2018 |
| | | | | JP | 2018526599 | A | 13-09-2018 |
| | | | | US | 2018180331 | A1 | 28-06-2018 |
| | | | | US | 2020025425 | A1 | 23-01-2020 |
| | | | | US | 2022252309 | A1 | 11-08-2022 |
| | | | | WO | 2016205717 | A1 | 22-12-2016 |
| EP 3744517 | A1 | | 02-12-2020 | AU | 2019246840 | A1 | 17-12-2020 |
| | | | | BR | 102020005881 | A2 | 08-12-2020 |
| | | | | CN | 110216924 | A | 10-09-2019 |
| | | | | CN | 110972467 | A | 07-04-2020 |
| | | | | EP | 3744517 | A1 | 02-12-2020 |
| | | | | JP | 7158405 | B2 | 21-10-2022 |
| | | | | JP | 2021529680 | A | 04-11-2021 |
| | | | | MY | 193668 | A | 24-10-2022 |
| | | | | SG | 11202002818T | A | 28-01-2021 |
| | | | | TW | 202045681 | A | 16-12-2020 |
| | | | | WO | 2020237813 | A1 | 03-12-2020 |

EPO FORM P0459

For more details about this annex : see Official Journal of the European Patent Office, No. 12/82